Europäisches Patentamt

European Patent Office

Office européen des brevets

(19)

(11) **EP 0 160 985 B2**

(12) **NEW EUROPEAN PATENT SPECIFICATION**

(45) Date of publication and mention
of the opposition decision:
**12.12.2001 Bulletin 2001/50**

(51) Int Cl.$^7$: **B24B 9/14**

(45) Mention of the grant of the patent:
**11.08.1993 Bulletin 1993/32**

(21) Application number: **85105655.6**

(22) Date of filing: **08.05.1985**

(54) **Method and device for calculating relationship between pre-edged lens and spectacle lens**

Verfahren und Vorrichtung zum Berechnen der Beziehung zwischen der Rohlinse und der Brillenlinse

Méthode et appareil pour calculer la relation entre la lentille brute et la lentille des lunettes

(84) Designated Contracting States:
**DE FR GB IT NL**

(30) Priority: **08.05.1984 JP 9139784**

(43) Date of publication of application:
**13.11.1985 Bulletin 1985/46**

(73) Proprietor: **Kabushiki Kaisha TOPCON
Tokyo (JP)**

(72) Inventors:
 • **Hara, Atsushi
 Machida-shi Tokyo (JP)**
 • **Isokawa, Nobuhiro
 Kawasaki-shi Kanagawa-ken (JP)**

 • **Suzuki, Yasuo
 Kuki-shi Saitama-ken (JP)**
 • **Hatano, Yoshiyuki
 Tokyo (JP)**
 • **Oogushi, Hiroaki
 Tokyo (JP)**

(74) Representative: **Müller-Boré & Partner
 Patentanwälte
 Grafinger Strasse 2
 81671 München (DE)**

(56) References cited:
 **EP-A- 0 092 364**

EP 0 160 985 B2

**Description**

The present invention relates to a method and a device for determining whether a pre-edged lens can be edged to be fitted to a spectacle frame and for edging a lens. More specifically, the present invention pertains to a method and a device which judges whether or not the pre-edged lens can be edged for having it fitted to a spectacle frame before the lens is edged.

Description of Prior Art

Before a lens is edged, a judgment must be made as to whether or not the peripheral configuration of the edged lens will conform to the shape of the spectacle frame. In fitting a spectacle lens to a frame, consideration must be made that the spectacle lens be positioned in the spectacle frame so that the axis of the spectacle lens will coincide with the corresponding eye of the wearer. Generally, this means that the center of the spectacle lens be eccentrically positioned with regard to the geometric center of the spectacle frame. The center of the spectacle lens must be further eccentrically placed with regard to the geometric center of the spectacle frame in order to correct squint by a prism function of the spectacle lens.

Conventionally, the aforementioned judgment is carried out by using a sucker device for pre-edged lenses, such as the "Point Setter" produced by TOKYO OPTICAL CO., LTD. which is the assignee of this invention. The sucker device for pre-edged lenses includes a sucker means for sucking the pre-edged lens to mount it on the lens edging machine, a target plate having a plurality of concentric circles, and an eccentricity scale extending from the center of the different concentric circles. The concentric circles indicate configurations of different pre-edged lenses. In the sucker device a template provided by copying the spectacle frame is located on the target plate so that the center of the template is kept off the center of the concentric circles by the predetermined eccentric distance, and judgment is made as to whether or not the template protrudes from the circles indicating the configuration of the predetermined pre-edged lens in order to judge the usability of the pre-edged lens for making a lens to be used in the spectacle frame.

Thus, in the aforementioned sucker device, it is required to provide such template for each spectacle, and there is no possibility of realizing highly precise judgment since it is difficult to produce precise templates and the precision of the eccentric setting of the template is affected by the operator's skill. Further, from the EP-A-92364 there is known a method for dimensioning a lens to fit into a spectacle frame.

OBJECT OF THE INVENTION

It is therefore an object of the present invention to provide a method and a device for calculating the relationship between the pre-edged lens and the spectacle frame and for edging a lens.

Another object of the present invention is to provide a method and a device for judging whether or not the pre-edged lens can be edged to be fitted to the spectacle frame without preparing a template.

SUMMARY OF THE INVENTION

In accordance with the present invention this is attained by a method according to claim 1 and a lens edging machine according to claim 3.

Preferred embodiments of the invention are the subject of the subclaims.

BRIEF DESCRIPTION OF THE DRAWINGS

Figure 1 is a perspective view showing a lens edging machine adopting one embodiment of the present invention;
Figure 2A is an exploded perspective view showing the spectacle frame measuring means;
Figure 2B is a perspective view showing the frame holding means;
Figure 2C is a front view of the frame holding means;
Figure 3 is a side view partly in section showing a detector for measuring the spectacle frame;
Figure 4 is a perspective view of a detector for measuring a lens template;
Figure 5 is an explanatory view for explaining a lens measuring process,
Figures 6A and 6B are explanatory views for explaining correction of lens measuring data;
Figure 7 is an explanatory view for explaining a lens template measuring process;
Figure 8 is a perspective view showing a lens measuring means;
Figure 9 is a plan view showing the lens measuring means;

Figure 10 is a sectional view of the lens measuring means;
Figure 11 is a sectional view along a line XI-XI in Figure 9;
Figure 12 is a sectional view along a line XII-XII in Figure 10;
Figure 13 is an explanatory view for explaining a pre-edged lens measuring process;
Figure 14 is an explanatory view for explaining the relation between the pre-edged lens and the lens template;
Figure 15 is an explanatory view for explaining coordinate exchange of lens measuring data;
Figure 16, 17A and 17B are explanatory views for explaining measurement of the peripheral thickness of a lens;
Figure 18A is an explanatory view for explaining the relation between the pre-edged lens and the spectacle frame;
Figure 18B is a schematic view of the spectacle frame;
Figure 19 is a block diagram of judging means; and

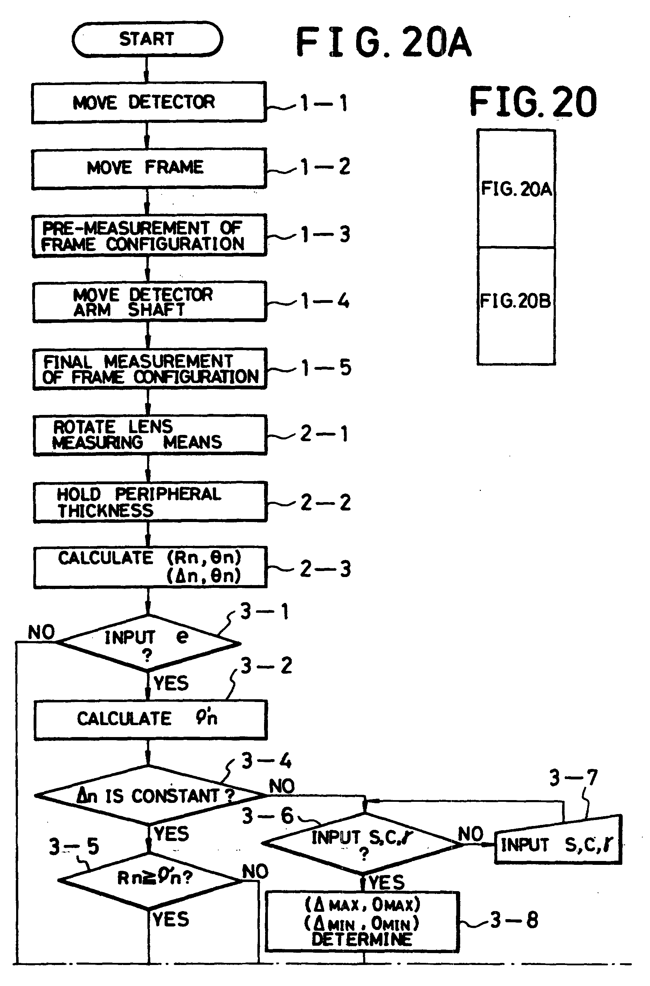

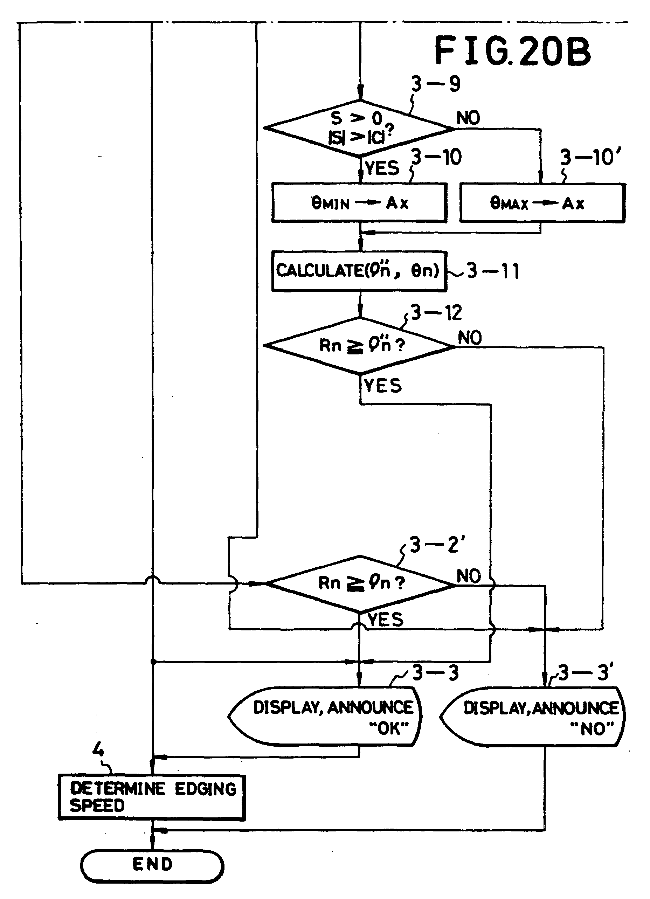

Figure 20 is a flow chart showing the overall operation of the judging means.

DESCRIPTION OF THE PREFERRED EMBODIMENT

(General Explanation of Lens Edging Machine)

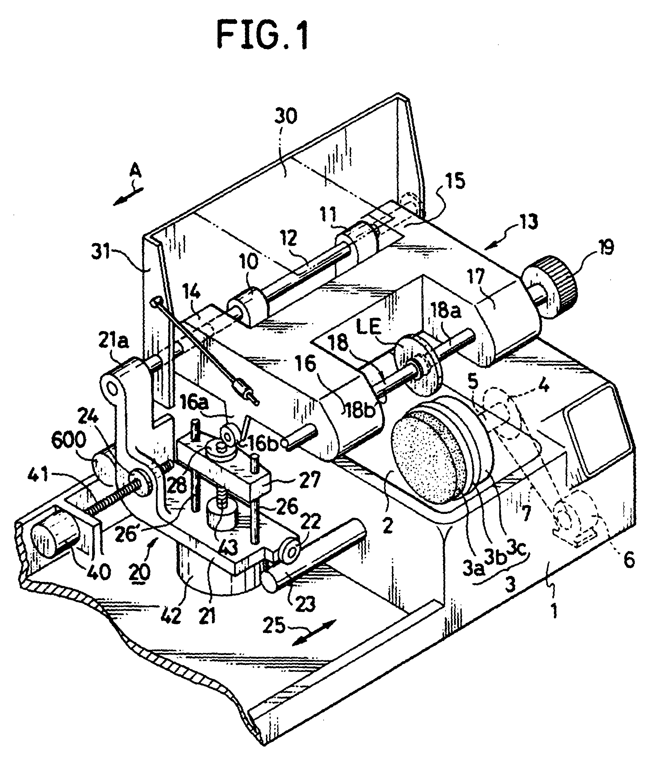

Referring to Figure 1, there is shown an edging section of a lens edging machine adopting one embodiment of the device for calculating the relationship between the pre-edged lens and the spectacle frame in accordance with the present invention.

In a grinding room 2 of a housing 1 there is provided a grinding wheel 3 comprising a roughing wheel 3a, a beveling wheel 3b having a large V-shaped groove in its periphery, and a cylindrical precision grinding wheel 3c, and the wheel 3 is secured on a shaft 5 having a pulley 4. The pulley 4 is connected with a grinding motor 6 through a belt 7 so that the wheel 3 is rotated by the motor 6.

In the housing 1 there are provided bearing members 10, 11 which are adapted to retationally, axially-movably hold a carriage shaft 12. One end of the carriage shaft 12 is rotationally mounted on a bearing member 21a provided on a transfer station 20 to be described later. A carriage 13 and arm members 14, 15 are secured on the shaft 12. On arm members 16, 17 of the carriage 13 there is provided a work holding shaft 18 comprising a pair of shafts 18a, 18b for holding the pre-edged lens LE to be edged. The shaft 18a has an operation handle 19 at its end, and by rotation of the handle 19 the shaft 18a is slid along its axis so that the shafts 18a, 18b support the lens LE between them.

There are provided a lens measuring means 30 to be described later, an arm portion 31 of which is mounted on the shaft 12 so as to swing on an axis in common with that of the carriage 13.

A base plate 21 of the station 20 has a pair of wheels 22 which are adapted to roll on rails 23 secured on the housing 1 so that the station 20 can move along the rails 23. The station 20 has a female screw 24 to be engaged with a transfer male screw 41, which is rotated by a carriage (Z-axis) motor 40 so that the station 20 is moved in both directions as shown by an arrow 25. The shaft 12, as mentioned above, is rotationally mounted on the member 21a, and the carriage 13 horizontally moves simultaneously with the station 20.

The base plate 21 has two vertical shafts 26, 26' parallel to each other, on which is slidingly mounted a stopping member 27. The stopping member 27 has a female screw 28 to be engaged with a transfer male screw 43, which is rotated by a X-axis motor 42 so that the stopping member 27 is upwardly or downwardly moved. The carriage 13 also has an arm portion 16a on the end, on which is mounted a rotation wheel 16b, and the rotation wheel 16b is placed on the upper surface of the stopping member 27 so that the carriage 13 is able to swing in response to a vertical motion of the stopping member 27.

(Spectacle Frame Measuring Means)

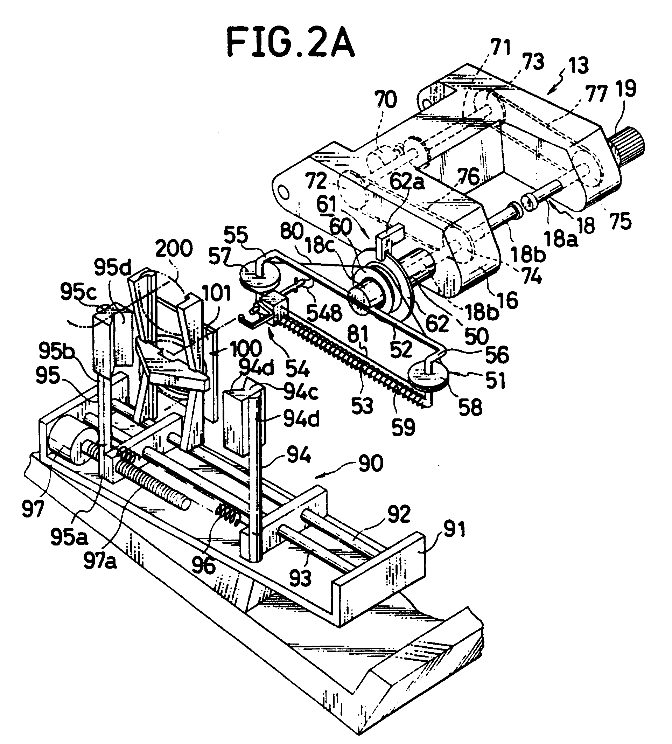

Referring to Figure 2A, there is shown means for digitally measuring the configuration of the spectacle frame or the lens template provided by copying the groove of the spectacle frame. The shaft 18b is supported by a bearing member 50 formed on the carriage 13. The shaft 18b has a detector arm 51 mounted at its end 18c, and a long side frame 52 of the detector arm 51 is mounted on an end portion 18c of the shaft 18b at right angles to the rotation axis of the shaft 18b. A detector 54 is provided on another long side frame 53 of the detector arm 51 to be moved thereon and biased to the end portion of the frame 53 by a pressure spring 59 coiled around the frame 53. On short side frames 55, 56 of the arm 51 there are rotationally provided pulleys 57, 58, respectively.

The shaft 18b rotationally supports a pulley 60 which is united with a code disc 62 of an encoder 61. A detecting head 62a of the encoder 61 is secured to the outside of the arm 16. A first wire 80 is wound around the pulley 60 and secured to the detector 54 and the side of the pulley 60 through the pulley 57 at their ends, respectively. A second wire 81 is wound around the pulley 60 in the opposite direction to the first wire 80 and secured to the detector 54 and the pulley 60 at their ends, respectively. With this arrangement, displacement of the detector 54 on the frame 53 can be detected as the rotation angle of the pulley 60 or the disc 62.

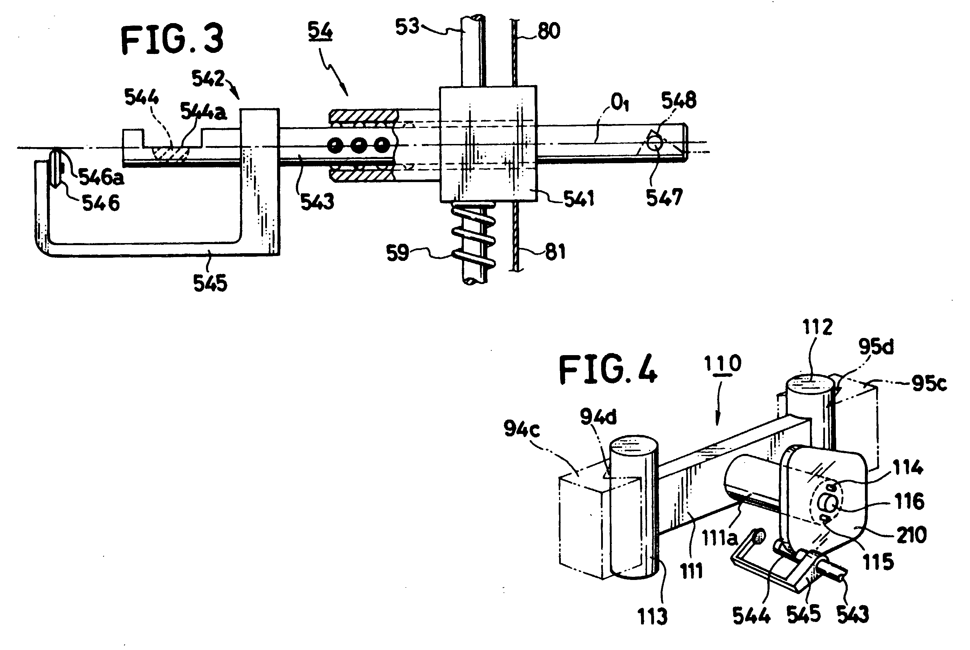

The detector 54, as shown in Figure 3, comprises a sliding seat 541 movably mounted on the frame 53, a sliding rotation shaft 543 rotationally supported by the seat 541, and a detecting feeler 542 secured to the shaft 543. The detecting feeler 542 has a lens template feeler 544 and a spectacle frame contacting wheel 546. The feeler 544 is a portion of the shaft 543, which is partially cut down so as to form a semicircular cross section. The wheel 546 is rotationally provided on an end of a U-shaped arm member 545 which is mounted on the shaft 543. The contacting surface 544a of the feeler 544 and the contacting periphery 546a of the wheel 546 are located on an axis $0_1$ of the shaft 543. On the other end of the shaft 543 a pin 547 is inserted so as to be parallel to the surface 544a, and the pin 547 engages with a stopping member 548 fixed on the side surface of the frame 52 when the detector 54 is in the first position.

Referring now to Figure 2A, in the carriage 13 there are provided a motor 70 for rotating the shafts 18a, 18b through sprocket wheel shaft 71 having a pair of sprocket wheels 72, 73 to be rotated by the motor 70 at its opposite ends. The shafts 18a, 18b have sprocket wheels 74, 75, respectively. Chains 76, 77 link the sprockets 72, 73 with the sprockets 74, 75 respectively, so that the shafts 18b, 18a are rotated by the motor 70.

In the housing 1, there is further provided a spectacle frame holding means 90, a station 91 of which is located parallel to the longitudinal direction of the arm member 16 at the time the carriage 13 is at the first position. The station 91 has a pair of rails 92, 93 parallel to the longitudinal direction of the arm member 16, which movably support spectacle frame supporting members 94, 95. The supporting members 94, 95 are constantly biased toward each other by a spring 96. The supporting member 95 has a screw portion at its leg portion 95a, which engages with a transfer screw 97a provided on the shaft of a Y-axis motor 97. The supporting members 94, 95 have fitting members 94c, 95c at the upper portions 94b, 95b of arms 94, 95 in order to fit a spectacle frame holding member 100.

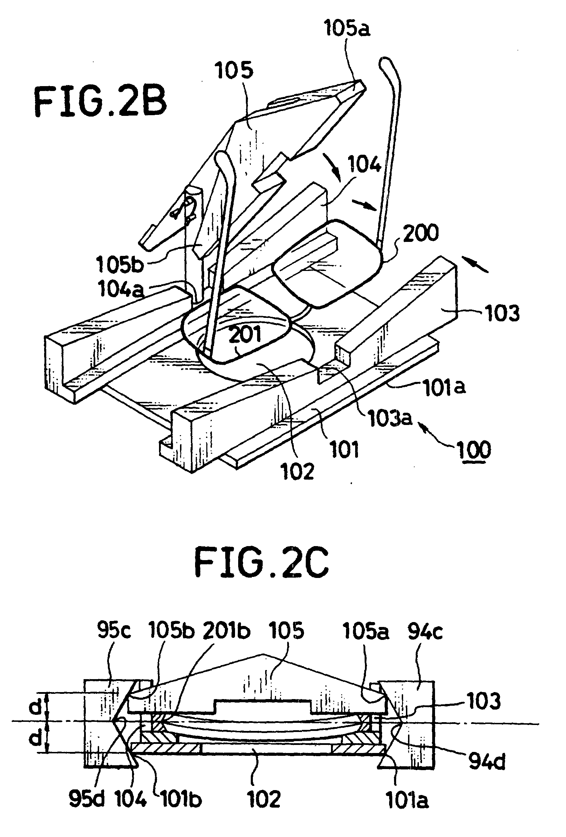

As shown in Figure 2B, the holding member 100 has a base plate 101 with a circular opening 102 at its center, spectacle frame holding arms 103, 104 provided on the plate 101 being opposite to each other, and a pressure member 105 for pressing a spectacle frame 200.

The arms 103, 104 hold upper and lower limbs of the spectacle frame 200 and the pressure member 105 presses the lens frame 200, so that the spectacle frame 200 is secured over the opening 102 of the member 100. At this time, a fore end 105a and a rear end 105b of the pressure member 105 are projected from concavities 103a, 104a of the arms 103, 104, whereby a fore end 101a and a rear end 101b (not shown in Figures) of the plate 101 are on the same plane with the ends 105a, 105b, respectively. The member 100 holding the spectacle frame 200 is supported by the supporting members 94c, 95c.

The base plate 101, the pressure member 105 and the concavities 103a, 104a are designed so that the upper edge of the rear end 106b and the lower edge of the rear end 101b are positioned at the same distance d from the center axis of a V-shaped groove of the lower limb of the spectacle frame 200. The supporting members 94c, 95c have V-shaped grooves 94d, 95d, respectively. As a result, as shown in Figure 2C, when the holding member 100 is supported by the supporting members 94c, 95c, the upper edge of the rear end 105b and the lower edge of the rear end 101b slide on surfaces of the V-shaped grooves 94d, 95d so that the center between the upper edge and the lower edge becomes coincident with the center 201b of the V-shaped groove 94d, 95d. In this way the center of a V-shaped groove of the lower limb coincides with the one of the supporting members 94c, 95c.

A template holding device 110, as shown in Figure 4, is used in the case where a lens template 210 is supported by the supporting members 94, 95. The device 110 comprises a holding frame 111, pole members 112, 113 secured on opposite ends of the holding frame 111, a template holding pole 111a fixed to the frame 111 at its center, and pins 114, 115, 116 projected from the template holding pole 111a at its end. The template 210 has three holes to be engaged with the pins 114, 115, 116.

(Operation of Spectacle Frame Measuring Means)

Hereinafter, the operation of the spectacle frame measuring means described above is explained. The spectacle frame holding member 100 is held by the supporting members 94, 95, and the carriage 13 is moved by rotation of the Z-axis motor 40 in the direction of the arrow A (shown in Figure 1) by a predetermined displacement. In accordance with the rotation of the Y-axis motor 97, the spectacle handling member 100 is moved along the rails 92, 93 by the predetermined displacement and the spectacle frame 200 is moved to the first set position so that the center 201b of the V-shaped groove of the lower limb is brought in contact with the contacting wheel 546 in same plane, and the rotation axis $0_1$ of the detecting arm 51 is located in the spectacle frame 200. At this time the wheel 546 is engaged with the V-shaped groove of the lower limb of the frame 200, and the pin 547 is released from the stopping member 548 to make the shaft 543 free to rotate. Displacement of the detector 54 along the frame 200 is converted into rotation angle to be measured by the encoder 61 through the wires 80, 81.

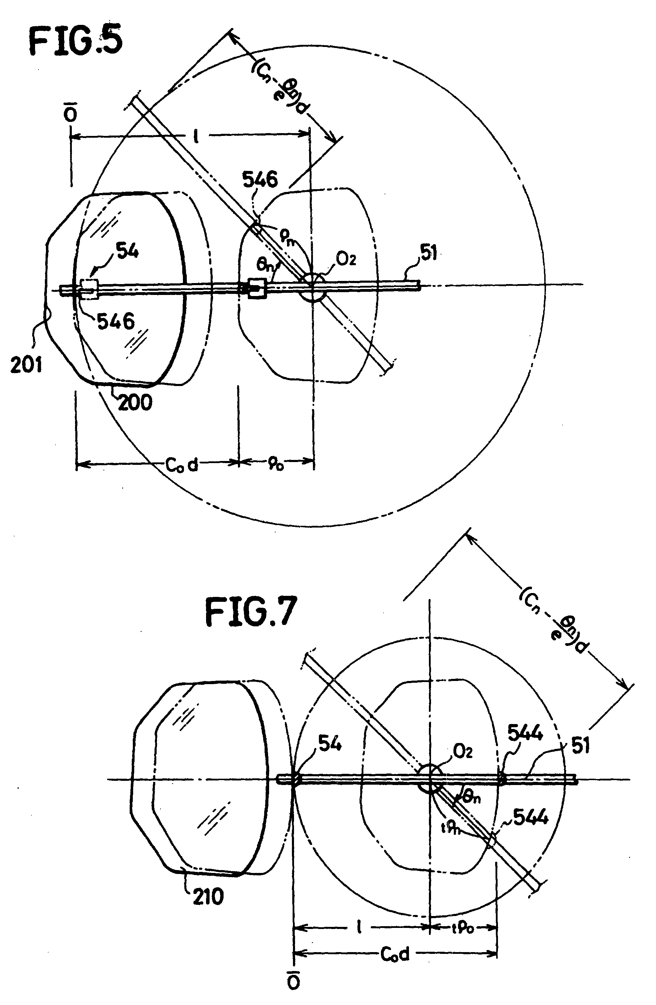

When the carriage 13 and the detecting arm 51 are located at the first position as shown in Figure 2A and the detector 54 is located at the first position as shown in Figure 5 where the detector 54 is pressed by the spring 59 so as not to abut on the spectacle frame 200, an origin O is taken to be on the axis $0_1$ and the distance between the origin O and the rotation axis $0_2$ of the arm 51 is taken to be $\ell$. The assumption is further made that the encoder 61 counts counting value $C_n$ in accordance with said predetermined displacement of the spectacle frame 200 and the rotation of the detecting arm 51, the encoder 61 has $e°$/pulse resolution, the detector 54 has d (mm)/pulse resolution in response to the resolution of the encoder 61, and rotation angle $\theta_n$ of the detecting arm 51 is $0°$ when the detecting arm 51 is positioned at the first standard position or parallel to the arm member 16 of the carriage 13. In the present embodiment, when the displacement of the detector 54 along the detecting arm 51 is measured by the encoder 61, a radius vector $\rho_n$ of the detecting arm 51 being at the rotation angle $\theta_n$ includes rotation of detecting arm 51, and threfore

$$\rho_n = \ell - (C_n - \frac{\theta n}{e}) d \tag{1}$$

When the detecting arm 51 is positioned at the standard position or $\theta_n = 0$, the radius vector $\rho0$ is obtained from the equation (1) as follows;

$$\rho0 = \ell - C_0 \cdot d \tag{2}$$

In this way digital radius vector values $(\rho_n, \theta_n)$ (n = 0, 1, 2, ..., N) of the configuration of the spectacle frame 200 about the axis $0_2$ are obtained through the rotation of the detecting arm 51 along the whole periphery of the spectacle frame 200.

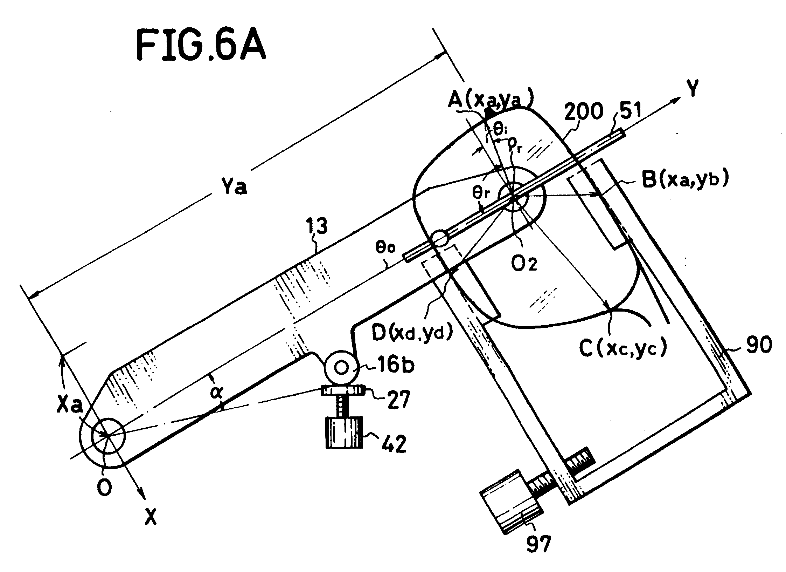

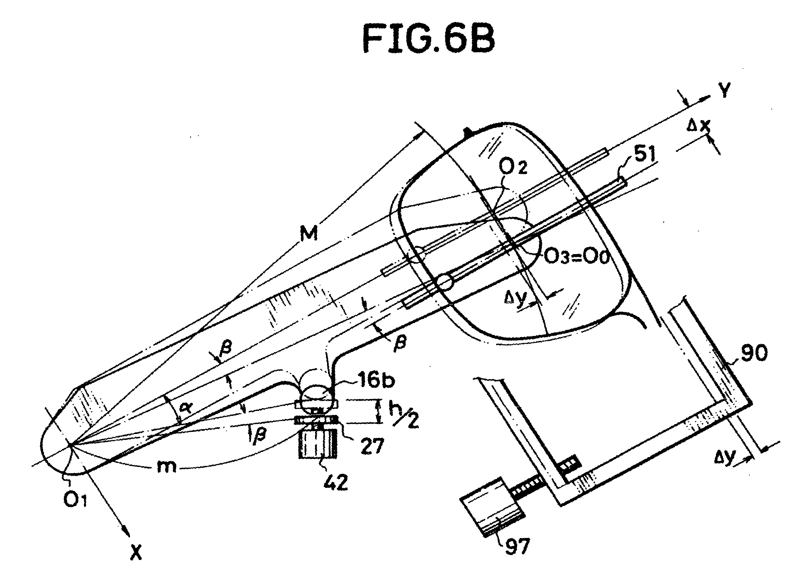

The values $(\rho_n, \theta_n)$ are those in the case where the rotation center $0_2$ of the detecting arm 51 is located at any position in the spectacle frame 200 and not in the case where the rotation center $0_2$ is located at the geometric center of the spectacle frame 200. Referring to Figures 6A and 6B, there is shown a method for inverting the former into the latter. Locating the carriage 13 at the first position, the Y-axis is taken to be the line connecting the rotation center $0_2$ and the swing center 0 of the carriage 13, and the X-axis is taken to be one crossing the Y-axis at right angles. On the conditions mentioned above, the spectacle frame data, or radius vector values $(\rho_n, \theta_n)$ of the polar coordinate system are converted into those $(x_n, y_n)$ of the rectangular coordinate system through the following transforming equations (3);

$$\left.\begin{array}{l} x_n = \rho_n \times \cos \theta_n \\ y_n = \rho_n \times \sin \theta_n \end{array}\right\} \quad \cdots\cdots\cdots\cdots\cdots \quad (3)$$

From the spectacle frame data $(x_n, y_n)$, the minimum coordinate point A $(x_a, y_a)$ and the maximum coordinate point C $(x_c, y_c)$ in the X-axis direction and the minimum coordinate point D $(x_d, y_d)$ and the maximum coordinate point B $(x_b, y_b)$ in the Y-axis direction are selected, coordinate values $0_3 (x_3, y_3)$ of the geometric center $0_3$ of the spectacle frame 200 are calculated from the following equation (4);

$$0_3 (x_3, y_3) = (\frac{x_c - x_a}{2}, \frac{y_b - y_d}{2}) \tag{4}$$

Then, differences $\Delta_x$, $\Delta_y$ between the rotation center $0_2 (x_0, y_0)$ under the first position and the $0_3 (x_3, y_3)$ are calculated through equations $\Delta x = x_0 - x_3$, $\Delta y = y_0 - y_3$. Shift of $\Delta y$ is carried out so that the frame holding means 90 is moved by $\Delta y$ by the Y-axis motor 97. While, shift of $\Delta x$ is carried out so that the carriage 13 is swung by going up and down the stopping member 27 by h. In the present embodiment the swing radius M of the detecting arm 51 is twice as long as the swing radius m of the wheel 16b,

$$\Delta_x \fallingdotseq M \tan \beta$$

$$h \fallingdotseq m \tan \beta$$

$$\text{and hence, } h \fallingdotseq \frac{\Delta x}{2} \tag{5}$$

The operation mentioned above makes the rotation center $0_2$ of the detecting arm 51 coincident with the geometric center $0_3$ of the eyeglass frame 200. Subsequently, the detecting arm 51 is rotated by an angle $\beta$ in order to shift the position of the origin. In this condition, the detecting arm 51 is rotated along the whole periphery of the spectacle frame 200 again, so that the digital configuration values $(\rho_n, \theta_n)$ of the spectacle frame 200 are obtained and memorized.

(Lens Template Measuring Means)

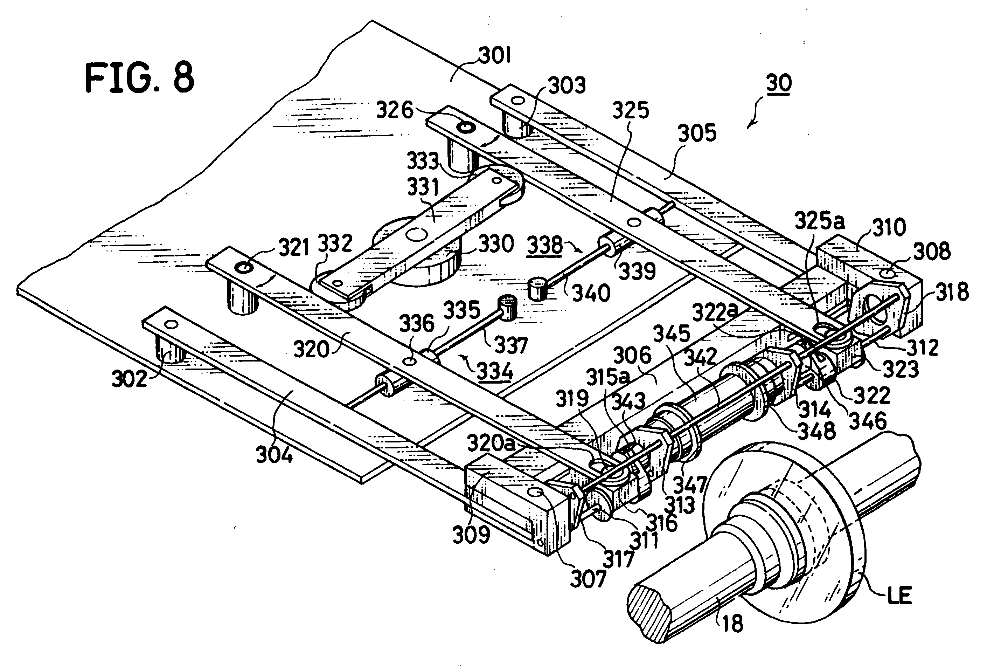

Referring to Figure 7, there is shown a method for measuring the spectacle template which is used instead of the spectacle frame. In Figure 7 elements corresponding to those shown in Figure 5 are assigned the same reference numerals and explanation thereof is omitted. To measure the configuration of the spectacle template 210, the feeler 544 is moved in contact with the periphery of the spectacle template 210 and the detecting arm 51 is rotated. The detecting arm 51 is shifted from the origin O by the predetermined distance to locate the rotation axis $0_2$ thereof in the spectacle template 210. In the case where the detecting arm 51 is rotated by angle $\theta_n$ from the first standard position thereof, the radius vector $t\rho_n$ is represented as follows:

$$t_{\rho n} = (C_n - \frac{\theta n}{e})d - \ell \tag{6}$$

While, in the case where the detecting arm 51 is positioned at the first standard position, the radius vector $t_{\rho 0}$ is represented as follows:

$$t_{\rho 0} = C_0 \cdot d - \ell \tag{7}$$

By the same method as that mentioned above for measuring the spectacle frame, the geometric center of the spectacle template 210 is calculated from the radius vector values $(t\rho_n, \theta_n)$ $(n = 0, 1, 2, ..., N)$, the rotation center $0_2$ of the detecting arm 51 is moved to the geometric center and rotated along the whole periphery of the spectacle pattern 210, and the measurings are memorized.

In this embodiment a contact point 546a between the groove of the spectacle frame 200 and the contacting wheel 546 or the contacting surface 544a, as shown in Figure 3, is adapted to be located on the axis 0, of the shaft 543, at the measuring time when the contacting wheel 546 and the feeler 544 supported by the U-shaped arm member 545 are pressed against the groove of the spectacle frame or the template, and the member 545 is turned to lie along a line perpendicular to the contact surface between the wheel 546 and the groove or the feeler 544 and the template. Consequently, the measurement mentioned above is always carried out with precision.

(Lens Measuring Means)

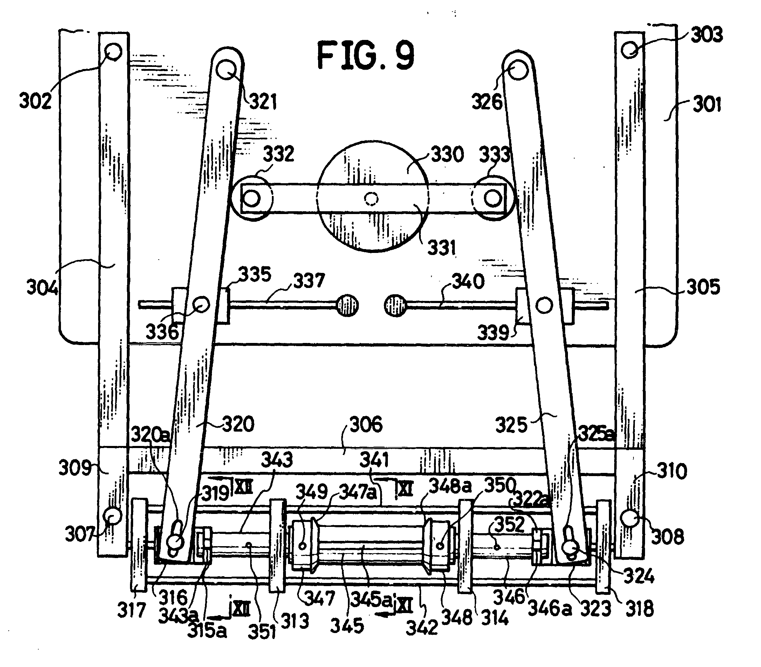

Referring to Figures 8 through 13 there is illustrated the lens measuring means 30 shown in Figure 1. Shafts 302, 303 are fixed on a base 301 normally projected from the arm portion 31 and pivot link arms 304, 305 at their ends, respectively. Arm members 309, 310 are mounted on the ends of a link bar 306 and pivoted on the link arms 304, 305 at their other ends through shafts 307, 308, respectively, so that the link arms 304, 305, the link bar 306 and the base 301 form a link mechanism.

The arm members 309, 310 have shafts 311, 312 lying parallel to the link bar 306 through deformed elliptical frames 317, 318. Other deformed elliptical frames 313, 314 pivot the shafts 311, 312 at their ends, respectively. A U-shaped arm portion 315a of a shaft member 315 is movably engaged with the shaft 311 at its middle portion and the shaft member 315 is movably engaged with a bearing portion 316a of a moving member 316. The moving member 316 has a pin 319 on its upper surface which is movably engaged with a slit 320a of an arm member 320. The arm member 320 is pivoted by a shaft 321 projected from the base 301 at its end. In the same way, a U-shaped arm portion 322a of a shaft member 322 is movably engaged with the shaft 312 at its middle portion and the shaft member 322 is movably engaged with a bearing portion 323a of a moving member 323. The moving member 323 has a pin 319 on its upper surface which is movably engaged with a slit 325a of an arm member 325. The arm member 325 is pivoted by a shaft 326 projected from the base 301 at its end.

On the base 301 is mounted an arm motor 330, the rotation shaft of which is provided with an arm plate 331. The arm plate 331 has rotary wheels 332, 333 at its opposite ends, which are pressed onto the sides of the arm members 320, 325. On the middle portion of the arm member 320 is mounted a detecting head 335 of an encoder 334, and a scale 337 of the encoder 334 passes through the detecting head 335. The base 301 pivots a scale 337 at its end. In the same way, a detecting head 339 is mounted on the arm member 325 at its middle portion, and a scale 340 of the encoder 334 passes through the detecting head 339.

Two rail members 341, 342 passing through frames 313, 314 are supported by frames 317, 318 parallel to the link bar 306 so as to support the frames 313, 314. The frame 313 is engaged with a cylindric member 345 at the end thereof into which a cylindric member 343 is rotationary inserted on a common axis thereof. The U-shaped arm portion 315a of the shaft member 315 is movably engaged with a groove 343a formed on the periphery of the cylindric member 343. In the same way, the frame 314 is engaged with a cylindric member 345 at the end thereof into which a cylindric member 346 is rotationally inserted on a common axis thereof. The U-shaped arm portion 322a of the shaft member 322 is movably engaged with a groove 346a formed on the outer periphery of the cylindric member 343.

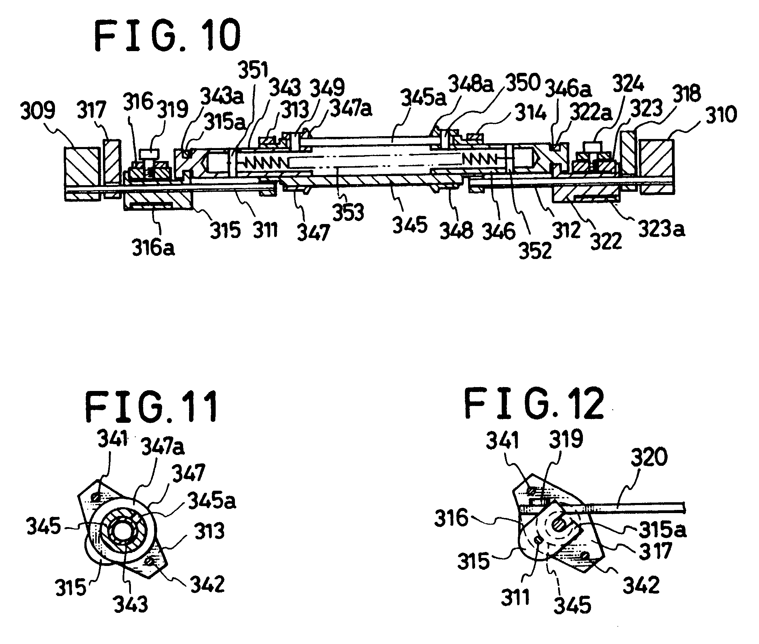

A ring 347 having a bevel 347a and a ring 348 having a bevel 348 are movably mounted on the cylindric member 345. The cylindric member 345 has a groove 345a parallel to the axis thereof, and a pin 349 connects the ring 347 with the cylindric member 343 and a pin 350 connects the ring 348 with the cylindric member 346. As shown in Figure 10, pins 351, 352 pulled by a spring 353 penetrate the cylindric members 343, 346, whereby the cylindric members 343, 346 are pulled toward each other and the rings 347, 348 linked to the cylindric members 343, 346 are also pulled toward each other.

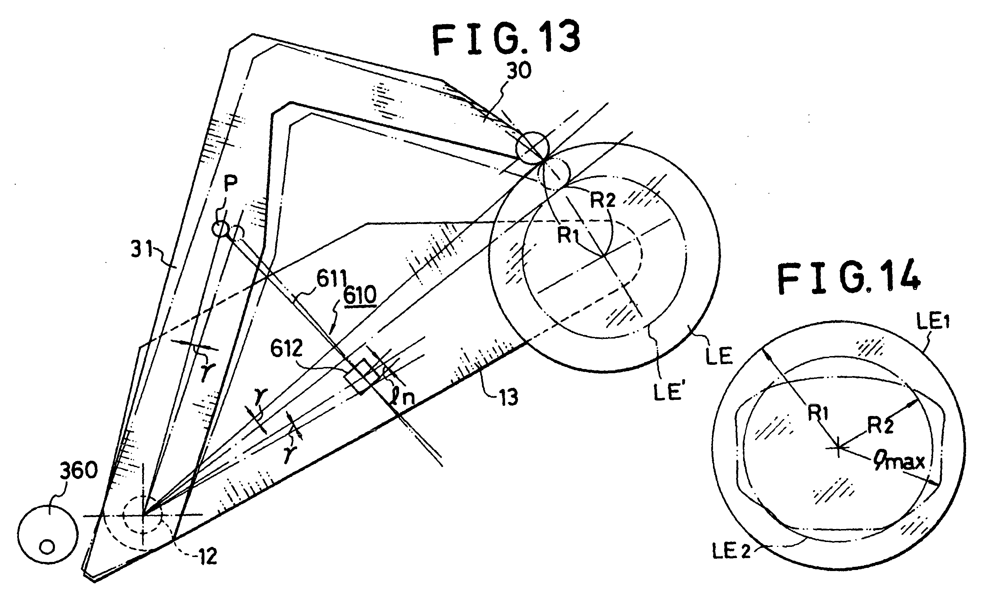

The carriage 13, as shown Figure 13, has a linear encoder 610 for measuring displacement of the carriage 13, a scale 611 provided on the side of the arm portion 31 of the lens measuring means 30 so as to be rotated about a pivotal point P, and a detector head 612 pivoted on the side of the carriage 13.

(Operation of Lens Measuring Means)

Figures 13 throuth 18B show the operations of the lens measuring means described above. In Figure 13 the carriage 13 is returned to the first position so that the edged lens LE is brought to the predetermined position. Subsequently, an eccentric cam 360 is rotated by a driving means (not shown in the Figure) so that the lens measuring means is turned about the shaft 12 to make the cylindric member 345 contact with the periphery of the edged lens LE. Next, the rotary work holder 18 is rotated stepwise by predetermined angle in the same manner as in edging the lens, and the radius vector $\rho'$ of the edged lens is measured at each stepped angle. The encoder 610 is utilized for measuring the radius vector $\rho'$. On the other hand, the rotation angle $(\gamma)$ of the arm portion is changed in response to a displacement $\ell_n$ of the detecting head 612 with regard to the scale 611.

The radius R of the pre-edged lens measured by the lens measuring means is compared with the maximum radius vector $\rho_{max}$ measured by the spectacle frame measuring means. When the inequality $R \geqq \rho_{max}$ is satisfied, the judgment is made that the pre-edged lens LE can be edged for fitting to the predetermined spectacle frame. For example, as shown in Figure 14, a pre-edged lens $LE_1$ is judged to be acceptable since the radius $R_1$ is larger than the radius vector $\rho_{max}$, and a pre-edged lens $LE_2$ is judged to be unacceptable since the radius $R_2$ is smaller than the radius vector $\rho_{max}$.

The above description of judgement is related to a case where the geometric center of the spectacle frame coincides with that of the pre-edged lens LE, but the spectacle lens is, in general, eccentrically edged so that the axis of the spectacle lens fitted in the frame coincides with that of the eye, because the axis of the eye generally does not pass through the geometric center of the frame. Therefore, it is necessary that the radius R be compared with the eccentric radius vector $\rho'_{max}$, adding the radius vector $\rho_{max}$ to an eccentric distance ge.

Further, if heterophoria is corrected by prismatic function of the spectacle lens, assuming that P designates a predetermined prismatic value and N means the refractive power, eccentric prismatic power pe can be obtained from the following equation;

$$pe = \frac{P}{N}$$

and total eccentric value e can be calculated as follows;

$$e = pe + ge$$

Meanwhile, the total eccentric power e, the eccentric distance ge and the eccentric prismatic value pe are divided into ex, ey, gex, gey and pex, pey, respectively (ex, gex and pex are x-axis components, and ey, gey and pey are y-axis components), then the equation mentioned above is reduced to the following equations:

$$ex = pex + gex$$
$$ey = pey + gey \qquad \Bigg\} \qquad \cdots\cdots\cdots\cdots\cdots \quad (8)$$

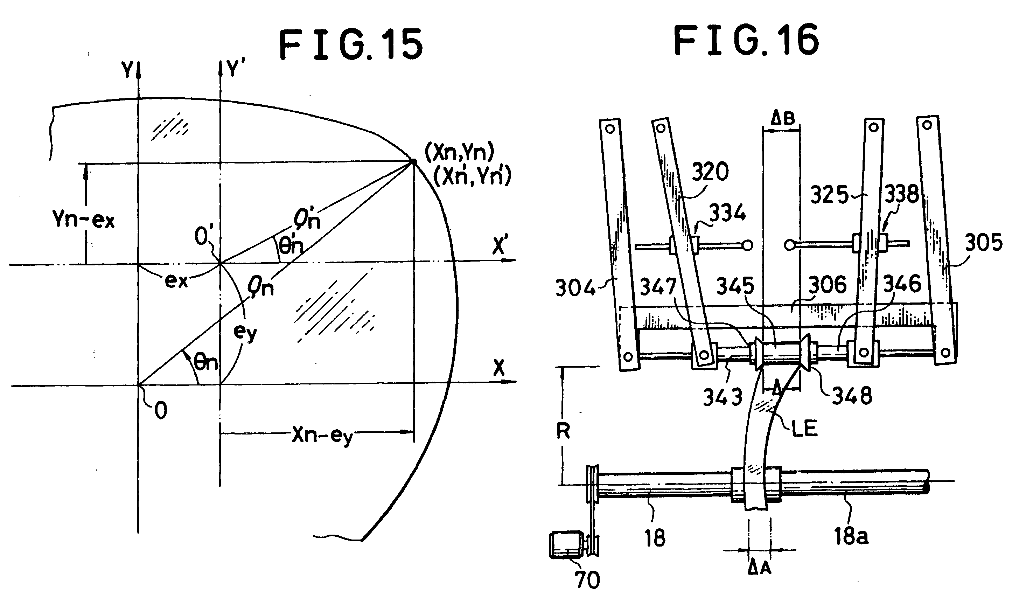

In order to calculate the relation between the pre-edged lens LE and the spectacle frame, including the total eccentric values ex and ey, the radius vector values $(\rho_n, \theta_n)$ of the polar coordinate system of the spectacle frame, as shown in Figure 15, are converted to coordinate values $(X_n, Y_n)$ of the rectangular coordinate system through the equation (3). The coordinate values $(X_n, Y_n)$ are calculated into those $(X'_n, Y'_n)$ of the rectangular coordinate system having an eccentric origin O' through the equation (9).

$$X'_n = X_n - ex$$
$$Y'_n = Y_n - ey \qquad \Bigg\} \cdots\cdots\cdots\cdots\cdots \quad (9)$$

The coordinate values $(X'_n, Y'_n)$ of the eccentric rectangular coordinate system are converted into the radius vector values $(\rho'_n, \theta'_n)$ in the eccentric polar coordinate system through the equation 10.

$$\rho'_n = \sqrt{X_n'^2 + Y_n'^2}$$
$$\theta'_n = \tan^{-1} \frac{Y'_n}{X'_n} \qquad \Bigg\} \cdots\cdots\cdots\cdots\cdots \quad (10)$$

The maximum radius vector $\rho'_{max}$ is selected from the radius vectors $\rho'_n$, and the radius R of the pre-edged lens is compared with the maximum radius vector $\rho_{max}$ in order to judge whether or not the pre-edged lens can be fitted to the prepared spectacle frame.

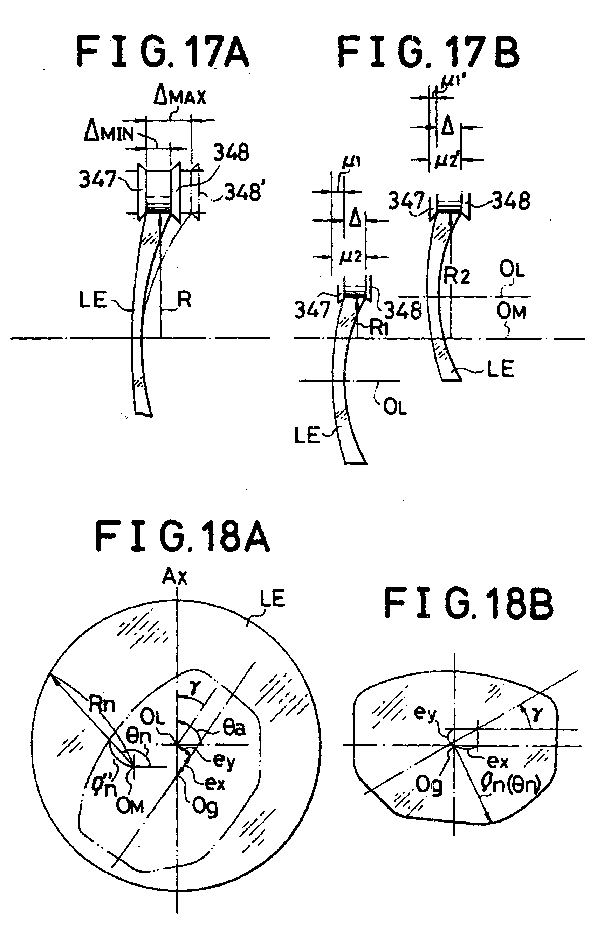

Figures 16, 17A and 17B illustrate measurement of the curvature and peripheral thickness of the lens by the lens measuring means 30. The motor 330 is energized to keep the arm plate 331 from pressing the arm members 320, 325, so that the cylindric members 343, 346 are moved toward each other by the spring 353. As a result, the periphery of the lens LE is caught between the rings 347, 348 linked with the cylindric members 343, 346. At this time the cylindric members 343, 346 cause the arm members 320, 325 to swing, and the rotation angle of the arm members 320, 325 or the displacements of the rings 347, 348 are measured by the encoders 334, 338. By energizing the motor 70 the lens LE is rotated stepwise, and the displacements of the rings 347, 348 are measured at each rotation angle of the lens LE in order to calculate the peripheral thicknesses $(\Delta_i, \theta_i)$ (i = 1, 2, 3, ....) of the lens LE at each radius vector. If the pre-edged lens is a spherical lens, the peripheral thickness should be constant at each radius vector.

The edging is performed at a selected speed, namely the edging is carried out slowly when the periphery of the lens is thick such as in a high negative power lens., and rapidly when the periphery is thin such as a positive power lens, so that the lens is edged at the best efficiency of the grinding wheel.

In the case where the pre-edged lens is for astigmatism, the peripheral thickness differs from radius vector to radius vector, and the direction of radius vector $\theta_{max}$ having the maximum peripheral thickness $\Delta_{max}$ and the direction of radius vector $\theta_{max}$ having the minimum peripheral thickness $\Delta_{min}$ are detected on the pre-edged lens. Thereby, if the lens is a negative astigmatic lens as shown in Figure 17A, the direction of radius vector $\theta_{min}$ coincides with an astigmatic direction of the lens. On the other hand, if the lens is a positive astigmatic lens, the direction of radius vector $\theta_{max}$ coincides with the astigmatic direction of the lens. As a result, the astigmatic direction of the lens can be obtained by detecting the maximum and minimum peripheral thickness thereof.

The above measurement of the radius R and the peripheral thickness $\Delta$ was explained with reference to where the pre-edged lens LE is supported by the work-holding shaft 18 so that the axis of the lens LE coincides with that of the shaft 18.

The peripheral thickness in measured as the same value as where the axis of the lens LE coincides with that of the shaft 18, even though the axis OL of the lens LE does not coincide with the rotation axis OM of the shaft 18, because, as shown in Figure 17B, spacing between a predetermined standard point and the rings 347, 348 changes from $\mu_1, \mu_2$ to $\mu_1', \mu_2'$ when the lens LE is rotated about the rotary axis OM of the shaft 18, but the peripheral thickness is calculated from the equation $\Delta = (\mu_2 - \mu_1) = (\mu_2' - \mu_1')$ so that the thickness $\Delta$ does not change in spite of the difference

between the radii $R_1$, $R_2$.

Similarly, even though the astigmatic lens LE is supported so that the axis OL of the lens LE does not coincide with the rotation axis OM, the maximum and minimum peripheral thicknesses $\triangle_{max}$, $\triangle_{min}$ are correctly measured to determine the directional angle $\theta_a$ of the astigmatic axis.

The radius vector values ($\rho_n$, $\theta_n$), as shown in Figure 18B, are calculated from the total eccentric values (ex, ey), the direction angle $\gamma$ of the astigmatic axis, and position data of the axis OL through a known coordinate exchange method. The judgment is made as to whether or not the pre-edged lens LE can be fitted to the predetermined spectacle frame by comparing the radius vector values ($\rho_n$, $\theta_n$) with the radius values ($R_n$, $\theta_n$).

(Control Circuit)

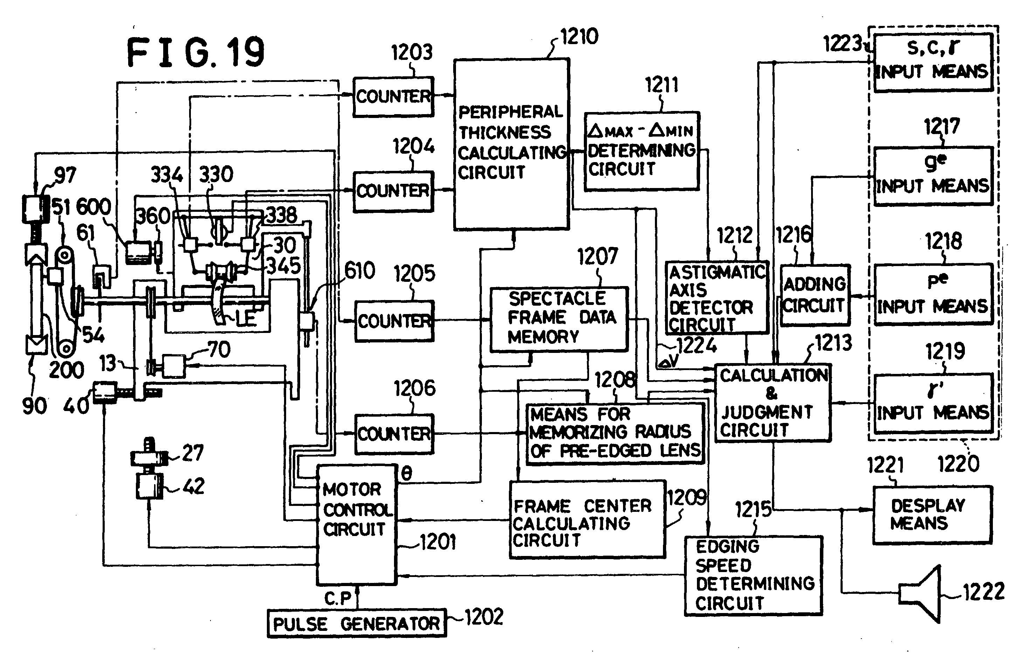

Referring now to Figure 19, there is shown a block diagram of a control circuit for the above-mentioned lens edging machine.

The pulse generator 1202 is connected with motors 40, 42, 70, 97, 330 and 1100 through a motor control circuit 1201, which selectively supplies pulses applied from the pulse generator 102 to the motors to control their rotation angle. The circuit 1201 is connected with a spectacle frame data memory 1207 for memorizing the frame data, means 1208 for memorizing a radius of the pre-edged lens, and a peripheral thickness calculating circuit 1210.

The encoders 61, 334, 338 and 610 are connected with counters 1203, 1204, 1205 and 1206 respectively which count pulses generated by the encodes. The counters 1203, 1204 are connected with the peripheral thickness calculating circuit 1210 which calculates the peripheral thickness $\Delta_n$ from the difference between the countered amounts thereof. The circuit 1210 provisionally memorizes the peripheral thickness $\Delta_n$ together with its rotation angle $\theta_n$. The circuit 1211 is connected with a $\Delta_{max}$ - $\Delta_{min}$ determinating circuit 1211 which determines the maximum and minimum peripheral thicknesses $\Delta_{max}$, $\Delta_{min}$ of the lens LE from the peripheral thickness values ($\Delta_n$, $\theta_n$).

The circuit 1211 is connected with an astigmatic axis detector circuit 1212. The circuit 1212 receives signals of spherical power S, astigmatic power C and direction angle of astigmatic axis $\gamma$ from a pre-edged lens characteristic input means 1223 so as to judge whether the pre-edged lens LE has positive power or negative power. If the lens LE has positive power, the rotation angle $\theta_{min}$ of the radius having the minimum peripheral thickness $\Delta_{min}$ is considered as the direction of astigmatic axis Ax. If the lens LE has negative power, the rotation angle $\theta_{max}$ of the radius having the maximum peripheral thickness $\Delta_{max}$ is considered as the direction of astigmatic axis Ax. The circuit 1212 is connected with a calculation and judgment circuit 1213 so that the circuit 1212 applies the signal of the rotary angle min or $\theta_{max}$ to the circuit 1213. If the pre-edged lens LE is spherical, not astigmatic, the circuit 1210 directly applies the signal of the peripheral thickness $\Delta_v$ of an arbitrary rotation angle $\theta_v$ to the circuit 1213 throuth a line 1224.

The circuit 1210 is connected with the motor control circuit 1201 through an edging speed determining circuit 1215. The circuit 1215 determines the edging speed or speed-drop of the stopping member 27 in accordance with the peripheral thickness values ($\triangle_n$, $\theta_n$) applied from the circuit 1210, so that the circuit 1201 controls the rotational velocity of the motor 42 under the output of the circuit 1215 during edging.

The counter 1205 is connected with the spectacle frame data memory 1207 to memorize the count of the encoder 61 and the rotation angle of the motor 70 or the radius vector angle $\theta$ as the radius vector values ($\rho_n$, $\theta_n$). The memory 1207 is connected with the circuit 1201 through a frame center calculating circuit 1209, which calculates the equations (3) through (5) under the radius vector values ($\rho_n$, $\theta_n$) memorized in the memory 1207. The circuit 1201 controls the motors 42, 97 in accordance with the frame center data calculated by the circuit 1209 so that the axis of the shaft 18 coincides with the center of the frame. Thereafter, the radius vector values ($\rho_n$, $\theta_n$) of the frame are measured again and readings are memorized by the memory 1207. The memory 1207 is connected with the calculation and judgment circuit 1213.

The means for memorizing a radius of pre-edged lens 1208 is connected with the encoder 610 through the counter 1206 and with the motor control circuit 1201, and it memorizes the lens radius value ($R_n$, $\theta_n$). The circuit 1208 is connected with the calculation and judgment circuit 1213.

An eccentric distance input means 1217 and an eccentric prismatic value input means 1218 are connected with the circuit 1213 through an addition circuit 1216, so that the signal of the total eccentric value e with the addition of the eccentric distance ge to the eccentric prism power pe is applied to the circuit 1213. An astigmatic axis setting angle input means 1220 is connected with the circuit 1213 to input an astigmatic axis setting angle $\gamma'$ to the circuit 1213. The input means 1223, 1217, 1218 and 1219 may be included in a keyboard input means 1220 such as a numerical keypad.

The calculation and judgment circuit 1213 consists of a microcomputer to perform the calculation and the judgment mentioned above, with reference to Figures 13 through 18. The circuit 1213 is connected with display means 1221 such as a liquid crystal display apparatus and talking means 1222 to inform the operator of the judgment as to whether or not the pre-edged lens LE can be edged to fit the spectacle frame.

(Overall operation of the embodiment)

Figure 19 shows a flow chart of the overall operation of the above embodiment.

(1) Spectacle frame measuring steps

Step 1-1: After a starting command is inputted, the motor control circuit 1201 energizes the Z-axis motor 40 so that the detector 54 fixed on the carriage 13 is moved toward the spectacle frame holding position.

Step 1-2: The circuit 1201 energizes the Y-axis motor 97 in the spectacle frame holding means 90 so that the frame 200 is moved until the detector 54 contacts the frame 200 and, further, the rotation center of the detector arm 51 is positioned in the frame 200.

Step 1-3: The circuit 1201 energizes the motor 70 under the control of a clock pulse CP generated by the pulse generator 1202 so that the detector arm 51 is rotated. The detector 54 is moved along the periphery of the frame 200 so as to be moved on the detector arm 51 by radius vector $\rho$, and displacement of the detector 54 is measured by the encoder 61, the outputs of which are counted by the counter 1205. Since the spectacle frame data memory 1207 receives the same clock pulse CP that controls the motor 70, the memory 1207 provisionally memorizes the radius vector values ($\rho_n$, $\theta_n$) responding to the rotation angle $\theta$ of the detector arm 51. This step is for pre-measuring the configuration of the spectacle frame 200.

Step 1-4: After the pre-measured readings according to the rectangular coordinate system memorized in the memory 1207 are converted into polar coordinate values by the equation (3), the geometric center of the frame 200 is calculated from the equation (4). The motor control circuit 1201 energizes the X-axis motor 42, the Y-axis motor 97, and the motor 70 for rotating the shafts 18a, 18b.

Step 1-5: The same operation as that of the step 1-3 is carried out to obtain the radius vector values ($\rho_n$, $\theta_n$) in the case where the detector arm 51 is positioned on the geometric center of the frame 200. The readings are memorized in the memory 1207. The present step is for final measurement of the frame configuration. After the final measurement the carriage 13 is returned to the first position.

(2) Lens measurement steps

Step 2-1: The motor control circuit 1201 energizes the lens measuring means motor 600 to rotate the eccentric cam 360, so that the lens measuring means 30 is freed from the eccentric cam 360. Gravity brings the cylindric member 345 in the means 30 into contact with the lens LE held by the carriage 13.

Step 2-2: The motor control circuit 1201 energizes the arm motor 330 so that the arm members 320, 325 are freed from the arm plate 331 and the pre-edged lens LE is held between the rings 347, 348.

Step 2-3: The motor 70 is energized to rotate the lens LE. The encoder 610 measures the radius $R_n$ of the lens LE at each rotation angle unit of the shaft 18, and the readings are counted by the counter 1206. The outputs of the counter 1206 are memorized by the means 1208 for memorizing radius of pre-edged lens together with the rotation angle of the shaft 18.

The encoders 334, 338 measure the front and back edges of the periphery of the pre-edged lens LE and the readings are counted by the counters 1203, 1204, respectively. The signals of the counts counted by the counters 1203, 1204 are inputted to the peripheral thickness calculating circuit 1210 together with that of the rotation angle $\theta_n$ of the shaft 18, so that the circuit 1210 calculates the peripheral thickness $\Delta_n$ and provisionally memorizes the peripheral thickness data ($\Delta_n$, $\theta_n$).

(3) Pre-edged lens judgment steps

Step 3-1: By the calculation and judgment circuit 1213 the judgment is made as to whether or not the signal of the total eccentric value e being the sum of the inputs of the input means 1217, 1218 is inputted therein. If the signal of the total eccentric value e is inputted to the circuit 1213, the step is advanced to step 3-2. If the signal is not inputted to the circuit, the step is advanced to step 3-2'.

Step 3-2: By means of the calculation and judgment circuit 1213 the spectacle frame radius vector values ($\rho_n$, $\theta_n$) according to the polar coordinate system are converted into values according to the rectangular coordinate system through the equations (8) through (10).

Step 3-2': The calculation and judgment circuit 1213 compares the frame radius vector n memorized in the memory 1207 with the radius $R_n$ of the pre-edged lens LE memorized in the memory means 1208 at each rotation angle $\theta_n$ (n = 1, 2, 3, ....). If the inequality $R_n \geqq \rho_n$ is satisfied at all rotation angle $\theta_n$, the circuit 1213 outputs a "YES" signal. On the other hand, if the inequality $R_n \geqq \rho_n$ is not satisfied at any rotation angle $\theta_n$, the circuit 1213 outputs a "NO" signal.

Step 3-3: When the circuit 1213 outputs the "YES" signal, the display means 1221 displays "OK" meaning that the pre-edged lens LE can be edged to fit the spectacle frame, and the talking means 1222 announces "OK".

Step 3-3': When the circuit 1213 outputs the "NO" signal, the display means 1221 displays "NO" meaning that the pre-edged lens cannot be edged to fit the spectacle frame, and the talking means 1222 announces "NO". The pre-edged lens judgment steps finish with the present step. Step 3-4: The calculation and judgment circuit 1213 judges whether or not the peripheral thicknesses $\triangle_n$ are constant at all rotation angles $\theta_n$ which are provisionally memorized in the peripheral thickness calculating circuit 1210. If the thicknesses $\triangle_n$ are constant, the step is advanced to step 3-5. If the thickness $\triangle_n$ are not constant, the process is advanced to step 3-6.

Step 3-5: The calculation and judgment circuit 1213 compares the frame radius vector $\rho'_n$ calculated on step 3-2 with the radii $R_n$ memorized in the means 1208 at each rotation angle $\theta_n$ (n = 1, 2, 3, ......). If the inequality $R_n \geqq \rho'_n$ is satisfied, the step is advanced to the step 3-3 and the step 4. If the inequality $R_n \geqq \rho'_n$ is not satisfied, the process is advanced to the step 3-3'.

Step 3-6: After the peripheral thicknesses n are not judged to be constant, the calculation and judgment circuit 1213 judges whether or not the pre-edged lens characteristic, namely the spherical power S, the astigmatic power C and the astigmatic axis set direction $\gamma'$, are inputted into the input means 1223. If they are inputted into the input means 1223, the step is advanced to step 3-8, and, if not, the step is advanced to step 3-7.

Step 3-7: The pre-edged lens characteristic is inputted by the input means 1223.

Step 3-8: The $\Delta_{max}$ - $\Delta_{min}$ determining circuit 1211 determines the maximum peripheral thickness $\Delta_{max}$ and its rotation angle $\theta_{max}$, and the minimum peripheral thickness $\Delta_{min}$ and its rotation angle $\theta_{min}$.

Step 3-9: The calculation and judgment circuit 1213 judges whether or not the spherical power S is positive (S > 0) and the absolute spherical power (S) is bigger than the absolute astigmatic power |C| (|S| > |C|). If both of the inequalities are satisfied, the pre-edged lens LE is judged to be positive and the step is advanced to step 3-10. On the contrary, if they are not satisfied, the pre-edged lens LE is judged to be negative and the step is advanced to step 3-10'.

Step 3-10: The rotation angle $\theta_{min}$ is determined to be that of the astigmatic axis Ax.

Step 3-10': The rotation angle $\theta_{max}$ is determined to be that of the astigmatic axis Ax.

Step 3-11: The calculation and judgment circuit 1213 performs a known coordinate system rotation conversion of the frame radius vector $\rho'_n$ which is converted under the eccentric value e so as to calculate a frame radius vector $\rho''$ in the case where the rotation angle of the astigmatic axis of the pre-edged lens LE coincides with the astigmatic axis set direction y'.

Step 3-12: The circuit 1213 compares the lens radius value ($R_n$, $\theta_n$) memorized in the means 1208 with the frame radius vector values ($\rho''_n$, $\theta_n$) so as to judge whether or not an inequality $R_n \geqq \rho''_n$ is satisfied at every rotation angle $\theta_n$ (n = 1, 2, 3, .... ). If the inequality $R_n \geqq \rho''_n$ is satisfied at every rotation angle $\theta_n$, the step is advanced to the step 3-3 and the step 4, and, if not, the step returns to step 3-3'.

(4) Edging speed determining step

Step 4: The edging speed determining circuit 1215 determines the edging speed on the basis of the peripheral thickness values ($\Delta_n$, $\theta_n$) inputted from the peripheral thickness calculating cirtuit 1210. Namely, the edging speed determining circuit 1215 instructs the motor control circuit 1201 to make the speed-drop of the carriage slower than standard when the peripheral thickness $\theta_n$ is larger than the predetermined thickness, and to make the speed-drop of the carriage faster than the standard when the peripheral thickness $\Delta_n$ is smaller than the predetermined thickness. The motor control circuit 1201 controls rotation numbers of the X-axis motor 42 at a unit time so as to control the speed-drop of the stopper 27 or the carriage 13 during edging step of the pre-edged lens, the explanation of which is omitted.

**Claims**

1. A method for determining whether a pre-edged lens can be edged to be fitted to a spectacle frame and for edging a lens **characterized by** the following steps:

   - a frame measurement step for digitally measuring respective radius vector values ($\rho$ n, $\theta$n) of vectors extending from an origin to a groove of the spectacle frame (201);
   - a lens measurement step for digitally measuring the radius (R) of the circular pre-edged lens (LE) to be measured, whereby the lens is held by a lens rotating shaft or shafts (18, 18a) so that the axis of the lens coincides with that of the shaft(s);
   - a step of converting the radius vector values ($\rho$ n, $\theta$ n) into coordinate values (Xn, Yn);

- a step of transforming said coordinate values (Xn, Yn) into eccentric coordinate values (X'n, Y'n) for compensating for an eccentricity of the geometric center (O) of the spectacle frame (201) with regard to the optical center (O') of the spectacle lens (LE), which coincides with the axis of the eye;
- a step of converting the eccentric coordinate values (X'n, Y'n) into eccentric radius vector values (ρ'n, θ'n);
- a step of comparing the radius (R) from the optical center (0) of the pre-edged lens (LE) with said eccentric radius vector values ( ρ'n, θ'n);
- a step of judging that said pre-edged lens (LE) can be edged to be fitted into said spectacle frame (201) if the radius (R) is longer than the maximum eccentric radius (ρ'max) of the eccentric radius vector values (ρ 'n, θ'n); and
- a final step of edging the lens (LE) held by the lens rotating shaft or shafts (18, 18a).

2. A method in accordance with claim 1 **characterized in that** the frame measurement step includes a step of digitally measuring respective radius vector values (tρ n, θn) of vectors extending from an origin of, to a periphery of, a template (210) provided by copying the groove of the spectacle frame (201).

3. A lens edging machine comprising frame measurement means (54, 61) for digitally measuring respective radius vector values (ρ n, θn) of vectors extending from an origin to a groove of a spectacle frame (201), means (1207) for storing the radius vector values (ρ n, θn), and a lens rotation shaft or shafts (18, 18a) for holding a pre-edged lens (LE) so that the axis of the lens coincides with that of the shaft(s),

**characterized in that**

said machine further comprises a device for determining whether the pre-edged lens (LE) can be edged to be fitted to the spectacle frame (201), and including:

- lens measurement means (345, 611, 612) for digitally measuring the radius (R) of the circular pre-edged lens (LE) to be measured, whereby the pre-edged lens (LE) is held by the lens rotation shaft or shafts (18, 18a);
- means (1208) for memorizing the radius (R) measured by the lens measurement means;
- means (1217, 1218) for inputting into a calculation and judgement means (1213) an eccentric quantity (ge, pe) relating to an eccentricity of the geometric center (0) of the spectacle frame (201) with regard to the optical center (0') of the spectacle lens (LE) which coincides with the axis of the eye; and
- said calculation and judgement means (1213) having functions of the following steps for

    converting the radius vector values (ρ n, θ n) stored in the means (1207) into coordinate values (Xn, Yn),

    transforming said coordinate values (Xn, Yn) into eccentric coordinate values (X'n, Y'n) based upon the eccentric quantity (ge, pe) inputted by the means (1217, 1218) for compensating for said eccentricity,

    converting the eccentric coordinate values (X'n, Y'n) into eccentric radius vector values (ρ'n, θ'n),

    comparing the radius (R) from the optical center (0') of the pre-edged lens (LE) with said eccentric radius vector values (ρ'n, θ'n), and

    judging that said pre-edged lens (LE) can be edged to be fitted into said spectacle frame (201) if the radius (R) is longer than the maximum eccentric radius (ρ'max) of the eccentric radius vector values (ρ'n, θ'n).

4. A lens edging machine in accordance with claim 3, **characterized in that** the frame measurement means (54, 61) further includes means (110) for supporting a template (210) provided by copying the groove of the spectacle frame (201), whereby said frame measurement means is capable to digitally measure the respective radius vector values (tρn, θn) of vectors extending from an origin of, to a periphery of, the template (210).

**Patentansprüche**

1. Verfahren zum Bestimmen, ob eine vor-bekantete Linse bekantet werden kann, um einem Brillengestell eingepaßt zu werden und zum Bekanten einer Linse, **gekennzeichnet durch** die folgenden Schritte:

- einen Gestell-Meßschritt zum digitalen Messen jeweiliger Radiusvektor-Werte (ρn, Θn) von Vektoren, die sich von einem Ursprung zu einer Rille des Brillengestells (201) erstrecken;
- einen Linsen-Meßschritt zum digitalen Messen des Radius (R) der kreisförmigen vorbekanteten Linse (LE), die zu messen ist, wobei die Linse **durch** eine Linsen-Drehwelle oder -Drehwellen (18, 18a) so gehalten ist, daß die Achse der Linse mit der der Welle (n) zusammenfällt;

- einen Schritt zum Umwandeln der Radiusvektor-Werte (pn, Θn) in Koordinatenwerte (Xn, Yn);
- einen Schritt zum Transformieren der Koordinatenwerte (Xn, Yn) in exzentrische Koordinatenwerte (X'n, Y'n) zum Ausgleichen einer Exzentrizität der geometrischen Mitte (O) des Brillengestelles (201) bezüglich der optischen Mitte (O') der Brillenlinse (LE), welche mit der Achse des Auges zusammenfällt;
- einen Schritt zum Umwandeln der exzentrischen Koordinatenwerte (X'n, Y'n) in exzentrische Radiusvektor-Werte (p'n, Θ'n) ;
- einen Schritt zum Vergleichen des Radius (R) von der optischen Mitte (O) der vorbekanteten Linse (LE) mit den exzentrischen Radiusvektor-Werten (p'n, Θ'n); und
- einen Schritt zum Beurteilen, daß die vorbekantete Linse (LE) bekantet werden kann, um in das Brillengestell (201) eingepaßt zu werden, wenn der Radius (R) länger ist als der maximale exzentrische Radius (p'max) der exzentrischen Radiusvektor-Werte (p'n, Θ'n); und
- einem abschließenden Schritt zum Bekanten der Linse (LE), die **durch** die Linsen-Drehwelle oder -Drehwellen (18, 18a) gehalten wird.

2. Verfahren nach Anspruch 1, **dadurch gekennzeichnet, daß** der Gestell-Meßschritt einen Schritt zum digitalen Messen von jeweiligen Radiusvektor-Werten (tpn, Θn) von Vektoren aufweist, die sich von einem Ursprung zu einem Rand einer Schablone bzw. Form (210) erstrecken, welche bereitgestellt wird durch Kopieren der Rille des Brillengestells (201).

3. Linsen-Bekantungsmaschine mit einer Gestell-Meßeinrichtung (54, 61) zum digitalen Messen jeweiliger Radiusvektor-Werte (pn, Θn) von Vektoren, die sich von einem Ursprung zu einer Rille eines Brillengestells (201) erstrecken, einer Einrichtung (1207) zum Speichern der Radiusvektor-Werte (pn, Θn), und einer Linsen-Drehwelle oder -Drehwellen (18, 18a) zum Halten einer vorbekanteten Linse (LE), so daß die Achse der Linse mit der der Welle (n) zusammenfällt,
**dadurch gekennzeichnet, daß**
die Maschine ferner eine Vorrichtung zum Bestimmen aufweist, ob die vorbekantete Linse (LE) bekantet werden kann, um einem Brillengestell (201) eingepaßt zu werden, und mit:

- einer Linsen-Meßeinrichtung (345, 611, 612) zum digitalen Messen des Radius (R) der zu messenden kreisförmigen vorbekanteten Linse (LE) , wobei die vorbekantete Linse (LE) gehalten wird durch die Linsen-Drehwelle oder -Drehwellen (18, 18a) ;
- eine Einrichtung (1208) zum Speichern des Radius (R), der durch die Linsen-Meßeinrichtung gemessen ist;
- eine Einrichtung (1217, 1218) zum Eingeben in eine Berechnungs- und Beurteilungseinrichtung (1213) einer exzentrischen Größe (ge, pe), die sich auf einer Exzentrizität der geometrischen Mitte (O) des Brillengestells (201) bezüglich der optischen Mitte (O') der Brillenlinse (LE) bezieht, welche mit der Achse des Auges zusammenfällt;
- wobei die Berechnungs- und Beurteilungseinrichtung (12, 13) Funktionen der folgenden Schritte hat zum Umwandeln der in der Einrichtung (1207) gespeicherten Radiusvektor-Werte (pn, Θn) in Koordinatenwerte (Xn, Yn), Umwandeln der Koordinatenwerte (Xn, Yn) in exzentrische Koordinatenwerte (X'n, Y'n) bezogen auf die exzentrische Größe (ge, pe) die durch die Einrichtung (1217, 1218) zum Ausgleichen der Exzentrizität eingegeben ist, Umwandeln der exzentrischen Koordinatenwerte (X'n, Y'n) in exzentrische Radiusvektor-Werte (p'n, Θ'n), Vergleichen des Radius (R) von der optischen Mitte (O') der vorbekanteten Linse (LE) mit den exzentrischen Radiusvektor-Werten (p'n, Θ'n), und
Beurteilen, daß die vorbekantete Linse (LE) bekantet werden kann, um dem Brillengestell (201) eingepaßt zu werden, wenn der Radius (R) länger ist als der maximale exzentrische Radius (p'max) der exzentrischen Radiusvektor-Werte (p'n, Θ'n).

4. Linsen-Bekantungsmaschine nach Anspruch 3, **dadurch gekennzeichnet, daß** die Gestell-Meßeinrichtung (54, 61) ferner eine Einrichtung (110) aufweist zum Halten einer Schablone bzw. Form (210), die vorgesehen ist durch Kopieren der Rille des Brillengestells (201), wobei die Gestell-Meßeinrichtung geeignet ist, die jeweiligen Radiusvektor-Werte (tpn, Θn) von Vektoren digital zu messen, die sich von einem Ursprung zu einem Rand der Schablone (210) erstrecken.

**Revendications**

1. Procédé pour déterminer si un verre dont le bord est prédécoupé peut être détouré pour être monté dans une monture de lunettes et pour détourer un verre, **caractérisé par** les étapes suivantes :

   une étape de mesure de monture pour mesurer de façon numérique des valeurs respectives de rayons vecteurs ($\rho_n$, $\theta_n$) de vecteurs s'étendant à partir d'une origine jusqu'à une rainure de la monture de lunettes (201) ;
   une étape de mesure de verre pour mesurer de façon numérique le rayon (R) du verre circulaire (LE) prédécoupé à mesurer, ce pour quoi le verre est maintenu par un ou des arbres (18, 18a) d'entraînement en rotation de verre, de sorte que l'axe du verre coïncide avec celui de l'arbre ou des arbres ;
   une étape de conversion des valeurs de rayons vecteurs (pn, $\theta$n) en valeurs de coordonnées (Xn, Yn) ;
   une étape de transformation desdites valeurs de coordonnées (Xn, Yn) en valeurs de coordonnées excentrées (X'n, Y'n) pour compenser l'excentricité du centre géométrique (O) de la monture de lunettes (201) par rapport au centre optique (O') du verre de lunettes (LE) qui coïncide avec l'axe de l'oeil ;
   une étape de conversion des valeurs de coordonnées excentrées (X'n, Y'n) en valeurs de rayons vecteurs excentrés (p'n, $\theta$'n) ;
   une étape de comparaison du rayon (R) issu du centre optique (O) du verre prédécoupé (LE) avec lesdites valeurs de rayons vecteurs excentrés (p'n, $\theta$'n) ;
   une étape de détermination du fait que ledit verre prédécoupé (LE) peut être détouré pour être monté dans ladite monture de lunettes (201) si le rayon (R) est plus grand que le rayon excentré maximal (p'max) des valeurs de rayons vecteurs excentrés (p'n, $\theta$'n) ; et
   une étape finale de détourage du verre (LE) maintenu par le ou les arbres (18, 18a) d'entraînement en rotation de verre.

2. Procédé selon la revendication 1, **caractérisé en ce que** l'étape de mesure de monture comprend une étape pour mesurer de façon numérique des valeurs respectives de rayons vecteurs (tpn, $\theta$n) de vecteurs s'étendant à partir d'une origine jusqu'à une périphérie d'un gabarit (210), obtenu en copiant la rainure de la monture de lunettes (201).

3. Machine à détourer les verres comprenant un moyen de mesure de monture (54, 61) pour mesurer de façon numérique des valeurs respectives de rayons vecteurs (pn, $\theta$n) de vecteurs s'étendant à partir d'une origine jusqu'à une rainure d'une monture de lunettes (201), un moyen (1207) pour mémoriser les valeurs de rayons vecteurs (pn, $\theta$n), et un ou des arbres d'entraînement en rotation de verre (18, 18a) pour maintenir un verre prédécoupé (LE) de sorte que l'axe du verre coïncide avec celui du ou des arbres ;
   **caractérisé en ce que**
   ladite machine comprend en outre un dispositif pour déterminer si le verre prédécoupé (LE) peut être détouré pour être monté dans la monture de lunettes (201) et comprenant :

   un moyen de mesure de verre (345, 611, 612) pour mesurer de façon numérique le rayon (R) du verre circulaire prédécoupé (LE) à mesurer, le verre prédécoupé (LE) étant maintenu par le ou les arbres (18, 18a) d'entraînement en rotation de verre ;
   un moyen (1208) pour mémoriser le rayon (R) mesuré par le moyen de mesure de verre ;
   un moyen (1217, 1218) pour entrer dans un moyen de calcul et de décision (1213) une valeur d'excentricité (ge, pe) relative à l'excentricité du centre géométrique (O) de la monture de lunettes (201) par rapport au centre optique (O') du verre de lunettes (LE), qui coïncide avec l'axe de l'oeil ; et
   **en ce que** ledit moyen de calcul et de décision (1213) assure les fonctions des étapes suivantes de :

   conversion des valeurs de rayons vecteurs (pn, $\theta$n) mémorisées dans le moyen (1207) en valeurs de coordonnées (Xn, Yn) ;
   transformation desdites valeurs de coordonnées (Xn, Yn) en valeurs de coordonnées excentrées (X'n, Y'n) basées sur la valeur d'excentricité (ge, pe) entrée par le moyen (1217, 1218) de compensation de ladite excentricité ;
   conversion des valeurs de coordonnées excentrées (X'n, Y'n) en valeurs de rayons vecteurs excentrés (p'n, $\theta$'n) ;
   comparaison du rayon (R) issu du centre optique (O') du verre prédécoupé (LE) avec lesdites valeurs de rayons vecteurs excentrés (p'n, $\theta$'n) ; et
   détermination du fait que ledit verre prédécoupé (LE) peut être détouré pour être monté dans ladite monture de lunettes (201) si le rayon (R) est plus grand que le rayon excentré maximal (p'max) des valeurs de rayons vecteurs excentrés (p'n, $\theta$'n).

4. Machine à détourer les verres selon la revendication 3, **caractérisée en ce que** le moyen de mesure de monture (54, 61) comprend en outre un moyen (110) pour supporter un gabarit (210) obtenu en copiant la rainure de la monture de lunettes (201), ce pour quoi ledit moyen de mesure de monture est capable de mesurer de façon numérique les valeurs respectives de rayons vecteurs ($t_{pn}$, $\theta_n$) de vecteurs s'étendant à partir d'une origine jusqu'à la périphérie du gabarit (210).

# FIG.1

# FIG.2A

FIG.2B

FIG.2C

FIG.3

FIG.4

# FIG.5

# FIG.7

# FIG.6A

EP 0 160 985 B2

# FIG.6B

EP 0 160 985 B2

FIG. 8

FIG. 9

FIG. 10

FIG. 11

FIG. 12

# FIG.13

# FIG.14

EP 0 160 985 B2

FIG.16

FIG.15

# FIG. 17A

# FIG. 17B

# FIG. 18A

# FIG. 18B

# FIG.19

COUNTER — 1203

PERIPHERAL THICKNESS CALCULATING CIRCUIT — 1210

$\triangle$MAX - $\triangle$MIN DETERMINING CIRCUIT — 1211

s,c,$r$ INPUT MEANS — 1223

COUNTER — 1204

g$^e$ INPUT MEANS — 1217

97

334  330

51 600

360

338

61

30

345

LE

610

COUNTER — 1205

SPECTACLE FRAME DATA MEMORY — 1207

ASTIGMATIC AXIS DETECTOR CIRCUIT — 1212

1224

$\triangle$V

ADDING CIRCUIT — 1216

p$^e$ INPUT MEANS — 1218

54

200

13

70

COUNTER — 1206

MEANS FOR MEMORIZING RADIUS OF PRE-EDGED LENS — 1208

CALCULATION & JUDGMENT CIRCUIT — 1213

$r'$ INPUT MEANS — 1219

90  40

27

42

$\theta$

MOTOR CONTROL CIRCUIT — 1201

FRAME CENTER CALCULATING CIRCUIT — 1209

1215

DESPLAY MEANS — 1221  1220

C.P

PULSE GENERATOR — 1202

EDGING SPEED DETERMINING CIRCUIT

1222

EP 0 160 985 B2

# FIG. 20A

# FIG.20

| |
|---|
| FIG.20A |
| FIG.20B |

START

MOVE DETECTOR — 1—1

MOVE FRAME — 1—2

PRE-MEASUREMENT OF FRAME CONFIGURATION — 1—3

MOVE DETECTOR ARM SHAFT — 1—4

FINAL MEASUREMENT OF FRAME CONFIGURATION — 1—5

ROTATE LENS MEASURING MEANS — 2—1

HOLD PERIPHERAL THICKNESS — 2—2

CALCULATE $(R_n, \theta_n)$ $(\Delta_n, \theta_n)$ — 2—3

3—1 INPUT $e$ ? — NO / YES

3—2 CALCULATE $\varphi'_n$

3—4 $\Delta_n$ IS CONSTANT ? — NO

3—5 $R_n \geq \varphi'_n$ ? — NO / YES

3—6 INPUT S,C,$r$ ? — NO

3—7 INPUT S,C,$r$

3—8 $(\Delta_{MAX}, O_{MAX})$ $(\Delta_{MIN}, O_{MIN})$ DETERMINE — YES

# FIG.20B

3—9

S > 0,
|S| > |C|?

NO

YES 3—10

$\theta_{MIN} \rightarrow A_x$

3—10'

$\theta_{MAX} \rightarrow A_x$

CALCULATE($\theta''_n$, $\theta_n$) 3—11

3—12

$R_n \geq \theta''_n$?

NO

YES

3—2'

$R_n \geq \theta_n$?

NO

YES

3—3

DISPLAY, ANNOUNCE "OK"

3—3'

DISPLAY, ANNOUNCE "NO"

4

DETERMINE EDGING SPEED

END